# EUROPEAN PATENT SPECIFICATION

(11) **EP 0 373 942 B1**
(45) Date of publication and mention of the grant of the patent: **21.09.1994**
(21) Application number: 89313106.0
(22) Date of filing: 14.12.1989
(51) Int. Cl.: F16C 13/00

(54) **Support arrangement for a variable-crown roll**
Stützvorrichtung für eine veränderliche Zylinderwalze
Dispositif de support pour un rouleau cylindrique variable

(30) Priority: 15.12.1988 FI 885801
(43) Date of publication of application: 20.06.1990
(73) Proprietor: VALMET PAPER MACHINERY INC., 00130 Helsinki (FI)
(72) Inventor: Niskanen, Juhani, SF-90460 Oulunsalo (FI)
(74) Representative: Godwin, Edgar James

(56) References cited:
- DE-A- 2 229 421
- DE-A- 3 010 741
- DE-U- 7 834 388
- FR-A- 2 342 424
- FR-B- 2 200 403
- GB-A- 2 125 117

## Description

The invention concerns a support arrangement for a variable-crown roll, according to the first part of claim 1. Such an arrangement is known from GB-A- 2 125 117.

In paper machines and equivalent, such rolls are commonly used as form a smoothing nip, a dewatering press nip, or a calendering nip with a counter-roll. For these purposes of use it is important that the distribution of the linear load in the nip, i.e. the profile, in the axial direction of the rolls can be made invariable or that this profile can be regulated as desired, e.g., in view of controlling the transverse moisture profile and/or the thickness profile (caliper) of the web. For this purpose of use, a number of different variable-crown rolls are known in prior art by means of which attempts are made to act upon the distribution of the linear load in a nip.

In prior art, a number of different variable-crown rolls for paper machines and equivalent are known. As a rule, these rolls comprise a massive or tubular, stationary roll axle and a roll mantle arranged revolving around said axle. Between said axle and the roll mantle, acting upon the inner face of the mantle, glide shoe arrangements and/or a chamber of pressure fluid or a series of chambers are fitted, so that the axial profile of the mantle at the nip can be aligned or regulated as desired. As a rule, the nips formed by such rolls, such as press nips or calendering nips, are loaded by means of loading forces applied to the axle journals of the variable-crown roll and of its counter-roll.

The present invention relates to such variable-crown rolls as comprise a series of glide shoes whose glide faces act upon the inner face of the roll mantle and whose glide faces are at least partly hydrostatically or hydrodynamically lubricated by means of a pressure fluid passed to the glide face.

In respect of the prior art related to the present invention, reference is also made, by way of example, to the DE Published Patent Application No. 22 29 421 and to the FI Patent No. 59,655. In the cited DE publication the glide shoe arrangement is described that is used perhaps most commonly in variable-crown rolls. In the construction in accordance with said DE publication, the hydraulic loading members, by means of which the roll mantle is supported on the non-revolving roll axle, consist of pistons fitted as mobile in cylinder bores provided in the axle, the glide shoes, which act upon the inner face of the roll mantle, being supported on said pistons by the intermediate of articulated joints. In such an arrangement, very high forces are effective in the articulated joint between the glide shoe and the piston, for which reason the articulated joint must be hydraulically relieved in order that its service life could be made sufficiently long. In spite of the relief, a friction of a certain magnitude is always effective in such an articulated joint, whereby the glide shoe cannot be positioned fully freely in relation to the piston. Owing to the articulated joint, the sealing arrangements of the loading member may also become quite problematic. Owing to all this, the cost of manufacture of such a loading member provided with an articulated joint is high, and the operation of the member is not satisfactory in all circumstances because of the friction effective in the articulated joint.

In the cited FI patent, the construction of the hydraulic loading member is accomplished so that the loading member is formed as a rigid piece which has no articulated joint. In said FI patent, this is carried into effect in two alternative ways, according to one embodiment of which cylinder bores have been formed into the roll axle, the piston parts of the loading members being fitted as mobile in said cylinder bores. In this embodiment, said piston parts have been shaped as spherical so that they can turn in the cylinder bores. In the other embodiment, pin-like projections corresponding to the cylinder bores have been formed on the roll axle, the glide shoes being supported and sealed pivotally on said projections. In the first embodiment of the cited FI patent, the support point of the glide shoe is placed quite far from the inner face of the roll mantle, whereby the construction is quite unstable. On the other hand, in the second embodiment, the glide shoes must be able to move quite long distance in the radial direction of the roll. Both of these embodiments are quite problematic in view of the sealing and, moreover, the positioning of the glide shoe against the inner face of the roll mantle is hampered by the friction at the sealing point, which must be able to move by the distance equalling the stroke length of the loading member.

The object of the present invention is to provide an improved support arrangement for a variable-crown roll so that said support arrangement does not involve the drawbacks described above. In view of achieving this objective, the invention is characterized by the characterising features of claim 1.

By means of the invention, compared with the prior art, some remarkable advantages are obtained, whereof, e.g., the following may be stated. In the solution of the invention, the hydraulic loading members of a variable-crown roll are formed as consisting of two parts, however, so that there is no mechanical articulated joint between the glide shoe and the piston. The glide shoe is loaded in relation to the piston exclusively hydraulically, whereby the glide shoe can be positioned against the roll mantle fully freely, because the friction in the articulated joint, which is involved in the conventional solutions, does not hamper this positioning. In the solution of the invention, the support point of the glide shoe is placed very close to the surface of the glide shoe and, moreover, the position of the support point relative the roll mantle is independent from the stroke length and from the position. In the solution of the invention, in the loading members a bushing-shaped, hollow piston is used, whereby, if necessary, into the glide shoes, long capillary bores extending into the hollow piston can be arranged, whose risk of blocking is very little, because the diameter of the capillary bores can be made larger. Moreover, in the arrangement in accordance with the invention, the construction of the hydraulic loading members is very simple, and therefore the cost of manufacture is low.

In the following, the invention will be described in detail with reference to an exemplifying embodiment of the invention illustrated in the figures in the accompanying drawing, the invention being by no means strictly confined to the details of said embodiment.

Figure 1 is a schematical axial vertical sectional view of a variable-crown roll which is provided with a support arrangement in accordance with the invention and which forms a nip with a counter-roll.

Figure 2 corresponds to Fig. 1, seen from the end of the roll.

Figure 3 is an enlarged sectional view, transverse to the roll, of one hydraulic loading member in a support arrangement in accordance with the invention.

Figure 4 shows the glide shoe of a hydraulic loading member seen from the direction of the face of the roll mantle.

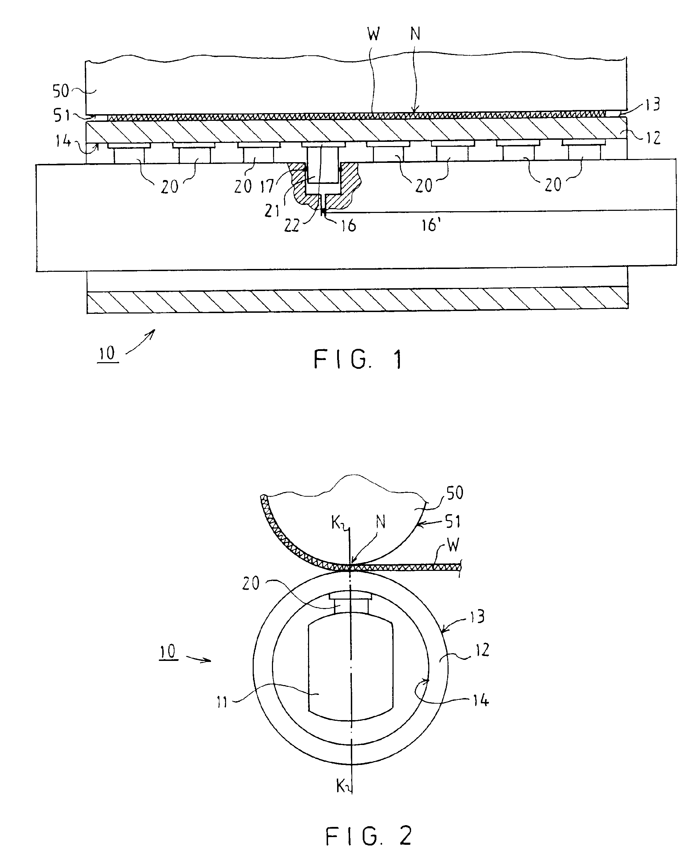

With reference to Figs. 1 and 2, to begin with, the general construction of a variable-crown roll will be described, in which roll 10 a support arrangement in accordance with the invention is used. The variable-crown roll 10 comprises a stationary roll axle 11, on which the roll mantle 12 is arranged revolving. Placed opposite the variable-crown roll 10, there is a counter-roll 50, so that the outer face 13 of the roll 10 and the outer face 51 of the counter-roll 50 jointly form a nip N, which may be, e.g., a press nip, a calendering nip, or equivalent, through which said nip, e.g., a paper web W or equivalent is passed. Between the axle 11 and the roll mantle 12 in the variable-crown roll, hydraulic loading members 20 acting upon the inner face 14 of the roll mantle are fitted, said members 20 being arranged as acting in the nip plane K-K. In the axial direction of the roll 10, a number of hydraulic loading members 20, placed at a distance from one another, are arranged as acting upon the inner face 14 of the roll, the compression applied by said loading members against the inner face 14 of the roll mantle being adjustable individually or in groups so that the axial profile of the roll mantle 12 is adjustable in the desired way.

For the hydraulic loading members 20, cylinder bores 15 have been formed into the roll axle 11, into which said bores the loading members 20 are fitted as mobile in the nip plane K-K and in which said bores said loading members are sealed by means of seals 17. For the purpose of loading the hydraulic loading members 20 against the inner face 14 of the roll mantle, pressure medium, e.g. hydraulic fluid, is passed into the cylinder bores 15 along pressure ducts 16 and 16′. In Figs. 1 and 2, for the sake of clarity of the illustration, the end bearings of the rolls and other, corresponding auxiliary devices have been omitted.

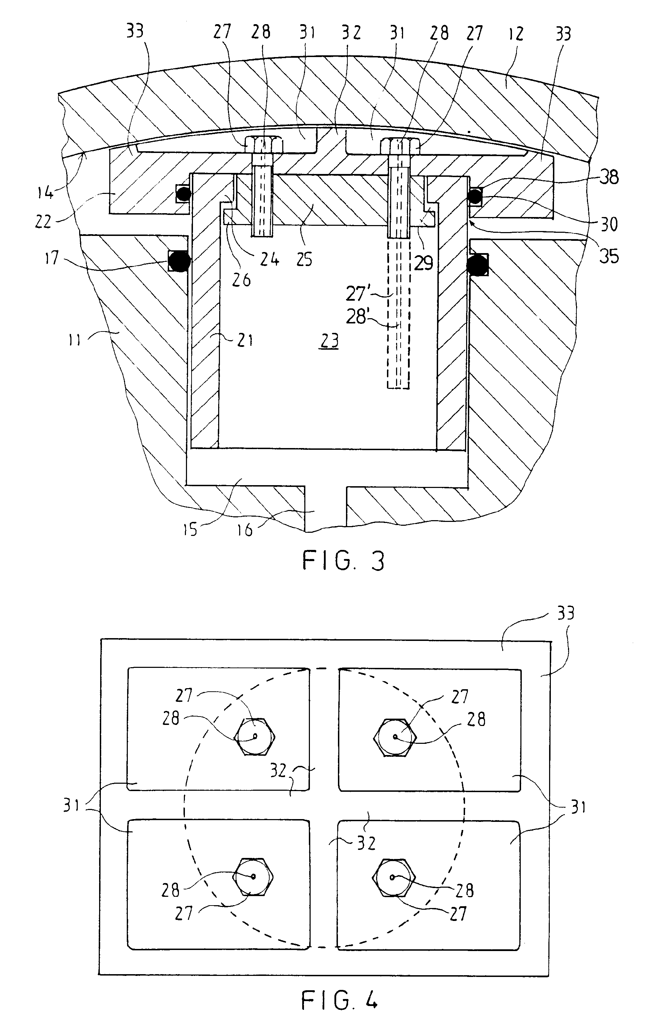

Figures 3 and 4 are more detailed illustrations of the construction of one hydraulic loading member 20 belonging to the support arrangement in accordance with the invention. The hydraulic loading member 20 consists of a piston 21 moving in the radial direction of the roll in the cylinder bore 15 provided in the roll axle 11 as well as of a glide shoe 22 placed against the inner face 14 of the roll mantle. As is shown in Fig. 3, the piston 21 is a hollow, bushing-shaped piece, in whose interior there is a large cavity space 23. The glide shoe 22 is fitted on the bushing-shaped piston 21 and, for the purpose of fitting the glide shoe 22 and the piston 21 together, a recess 35 corresponding to the cross-sectional form of the piston 21 has been formed into the lower face of the glide shoe, into which recess the outer end of the piston 21 is fitted. The recess 35 in the glide shoe 22 is somewhat larger than the cross-section of the piston 21 so that the glide shoe 22 and the piston 21 can move relative one another. For the purpose of sealing the piston 21 and the glide shoe 22 relative one another, a seal groove 38 running around the recess has been formed into the side face of said recess 35, and into said groove 38 a seal 30 has been fitted, which is in contact with the outer face of the piston 21.

In order to attach the piston 21 and the glide shoe 22 to one another, a shoulder 24 directed towards the interior of the piston 21, i.e. towards the cavity space 23, has been formed into the outer end of the bushing-shaped piston 21. In a corresponding way, into the cavity space 23 in the piston, a separate fastening piece 25 has been fitted, which is attached to the glide shoe 22 rigidly by means of fastening screws 27. Thus, said fastening piece 25 is fixed rigidly on the inner face of the glide shoe 22. On the other hand, onto the fastening piece 25 a shoulder 26 has been formed, which is directed outwards in the radial direction of the piston and which is placed between the shoulder 24 on the piston and the bottom of the cylinder bore 15. Thus, said shoulders 24 and 26 prevent removal of the glide shoe 22 off the piston 21. The shoulders 24 and 26 are, however, not in contact with each other, but said shoulders are arranged so that, when the glide shoe 22 rests on the piston 21, a gap 29 remains between the shoulders 24 and 26, said gap permitting movement of the piston 21 and the glide shoe 22 relative one another. Thus, the glide shoe 22 is capable of moving in the axial direction of the piston 21 in relation to the piston by the distance permitted by the gap 29 and, moreover, the glide shoe 22 can be inclined in relation to the piston 21, because the cross-section of the piston 21 is smaller than the recess 35 provided in the lower face of the glide shoe 22, as was already described above.

In the conventional way, into the curved outer face of the glide shoe 22, i.e. into the face placed towards the inner face 14 of the roll mantle, pockets 31 have been formed, which act as hydrostatic lubrication spaces and which are separated from each other by intermediate ridges 32 and edge ridges 33. Into said pockets 31, lubricant is passed through capillary bores 28 formed in the fastening screws 27 so as to provide a fluid film between the glide shoe 22 and the inner face 14 of the roll mantle. Since, in the solution in accordance with the invention, a hollow, bushing-shaped piston 21 is used in whose interior there is a large cavity space 23, if desired, in the solution it is possible to use long fastening screws 27′, shown by dashed lines in Fig. 3, which extend to the proximity of the inner end of the piston 21. Thus, in the solution in accordance with the invention, if desired, the capillary bores 28′ can be made remarkably long, i.e. almost equal to the length of the entire hydraulic loading member 20. Hereby the advantage is obtained that, when long capillary bores 28′ are used, to a corresponding extent the diameter of the capillary bores can be made larger, whereby their risk of blocking is essentially lower than in the case of shorter capillary bores 28. In the solution in accordance with the invention, the location of the support point of the glide shoe 22 in relation to the roll mantle 12 is independent from the position of the piston 21 in the cylinder bore 15, for the support point of the glide shoe 22 is always placed at the inner face of the fastening piece 25 and at the bottom of the recess 35 formed into the glide shoe 22, because there is no particular articulated joint between the piston 21 and the glide shoe 22. Thus, the glide shoe 22 can move quite freely in relation to the piston 21. The only factor that restricts the movement of the glide shoe 22 is the friction force derived from the seal 30.

When the hydraulic loading members 20 are loaded in a support arrangement in accordance with the invention by passing pressure medium into the cylinder bores 15, the pressure medium enters into the cavity space 23 in the piston 21, and thereby it presses the glide shoes 22 against the inner face 14 of the roll mantle. Thus, the piston 21 does not restrict the movement or the position of the glide shoe 22 in any way, but it acts only as a guide of the glide shoe 22. The lubricant has access out of the cavity space 23 in the piston along the capillary bores 28 or 28′ onto the inner face 14 of the roll mantle to form a fluid film between the glide shoes 22 and the inner face of the roll mantle. When the roll axle 11 is deflected by the effect of loading forces, then the glide shoes 22 can be positioned in accordance with the roll mantle 12, and the pistons 21 can be positioned in accordance with the axle 11, because the pistons 21 and the glide shoes 22 can turn freely in relation to one another.

## Claims

1. Support arrangement for a variable-crown roll, said roll (10) comprising a non-revolving roll axle (11) on which the roll mantle (12) is rotatably arranged, between which said roll mantle (12) and roll axle (11) hydraulic loading members (20) are provided, which act upon the inner face (14) of the roll mantle in the nip plane (K-K), which are supported on the roll axle (11), which are loaded by means of a hydraulic pressure medium, and which comprise pistons (21) fitted into cylinder bores (15) or equivalent formed into the roll axle (11) as well as glide shoes (22) acting upon the inner face (14) of the roll mantle, said pistons (21) comprising bushings provided with inside cavity spaces (23), said glide shoes (22) being attached to the outer ends of the pistons and hydraulically sealed (30) and being pivotable and displaceable in the radial direction of the roll (10), the hydraulic pressure medium being passed into the cavity spaces (23) in the pistons (21) so as to act upon the interior of the glide shoes (22) and, out of the cavity spaces (23), through capillary bores (28,28′) into pockets (31) which act as hydrostatic lubrication spaces in the glide shoes (22), characterised in that in the outer ends of the bushing-shaped pistons (21) inside shoulders (24) have been formed, which are directed in the radial direction of the pistons (21) towards the cavity spaces (23), and that into the cavity spaces (23) fastening pieces (25) have been fitted, which are attached to the glide shoes (22) and which are provided with outwardly directed shoulders (26) placed between the shoulders (24) on the pistons (21) and the bottoms of the cylinder bores (15), and gaps (29) which permit movement of the glide shoes (22) and the pistons (21) relative to one another remain between said shoulders (24,26).

2. Support arrangement as claimed in Claim 1, characterised in that the glide shoe (22) and the fastening piece (25) of the piston (21) are connected to one another by means of fastening screws (27,27′), into which screws said capillary bores (28,28′) extend from the cavity space (23) in the piston into the pockets (31) on the glide shoe have been formed.

3. Support arrangement as claimed in Claim 1 or Claim 2 characterised in that the fastening screws (27′) and the capillary bores (28′) provided in them have been formed long to extend deep into the cavity space (23) in the piston.

4. Support arrangement as claimed in any of the preceding claims, characterised in that into the inner face of the glide shoe (22), a recess (35) has been formed, into which the outer end of the piston (21) has been fitted as mobile and sealed.

5. Support arrangement as claimed in any of the preceding claims, characterised in that the piston (21) and the glide shoe (22) are sealed in relation to each other by means of an annular seal (30) fitted between the outer face of the bushing-shaped piston (21) and the recess (35) formed into the inner face of the glide shoe (22).

6. Support arrangement as claimed in Claim 5, characterised in that the seal (30) is fitted in a seal groove (38) formed into the side face of said recess (35) and passing around the piston (21).

## Patentansprüche

1. Stützanordnung für eine Walze mit veränderbarer Balligkeit, wobei die genannte Walze (10) eine nichtumlaufende Walzenachse (11), an der der Walzenmantel (12) drehbar angeordnet ist, umfaßt, zwischen dem besagten Walzenmantel (12) und der Walzenachse (11) Flüssigkeitsdruckelemente (20) vorgesehen sind, welche auf die Innenfläche (14) des Walzenmantels in der Walzenspaltebene (K-K) einwirken, welche an der Walzenachse (11) abgestützt sind, welche mittels eines hydraulischen Druckmediums belastet werden und welche in in die Walzenachse (11) hinein ausgebildete Zylinderbohrungen (15) oder ein Äquivalent eingesetzte Kolben (21) wie auch auf die Innenfläche (14) des Walzenmantels einwirkende Gleitschuhe (22) enthalten, die genannten Kolben (21) mit innenseitigen Hohlräumen (23) versehene Buchsen umfassen, die besagten Gleitschuhe (22) an den äußeren Enden der Kolben angebracht sowie hydraulisch abgedichtet (30) und in der radialen Richtung der Walze (10) schwenkbar sowie verlagerbar sind und wobei das hydraulische Druckmedium in die Hohlräume (23) in den Kolben (21), so daß es auf das Innere der Gleitschuhe (22) wirkt, und aus den Hohlräumen (23) durch Kapillarbohrungen (28, 28′) in Taschen (31), die als hydrostatische Schmierräume in den Gleitschuhen (22) funktionieren, geführt wird, dadurch gekennzeichnet, daß in den äußeren Enden der buchsenförmigen Kolben (21) innenseitige Schultern (24) ausgebildet worden sind, die in der radialen Richtung der Kolben (21) zu den Hochlräumen (23) hin gerichtet sind, daß in die Hohlräume (23) Befestigungsstücke (25) eingesetzt worden sind, welche an den Gleitschuhen (22) befestigt sowie mit auswärts gerichteten, zwischen den Schultern (24) an den Kolben (21) und den Böden der Zylinderbohrungen (15) angeordneten Schultern (26) versehen sind, und daß Spalte (29), die eine Bewegung der Gleitschuhe (22) und der Kolben (21) mit Bezug zueinander erlauben, zwischen den genannten Schultern (24, 26) verbleiben.

2. Stützanordnung nach Anspruch 1, dadurch gekennzeichnet, daß der Gleitschuh (22) und das Befestigungsstück (25) des Kolbens (21) untereinander mittels Befestigungsschrauben (27, 27′) verbunden sind, in welchen Schrauben die genannten Kapillarbohrungen (28, 28′), die sich vom Hohlraum (23) im Kolben in die Taschen (31) am Gleitschuh erstrecken, ausgebildet worden sind.

3. Stützanordnung nach Anspruch 1 oder Anspruch 2, dadurch gekennzeichnet, daß die Befestigungsschrauben (27') und die in diesen vorgesehenen Kapillarbohrungen (28') lang ausgebildet worden sind, um sich tief in den Hohlraum (23) im Kolben zu erstrecken.

4. Stützanordnung nach einem der vorhergehenden Ansprüche, dadurch gekennzeichnet, daß in die innere Fläche des Gleitschuhs (22) hinein eine Vertiefung (35) ausgebildet worden ist, in welche das äußere Ende des Kolbens (21) beweglich und abgedichtet eingesetzt worden ist.

5. Stützanordnung nach einem der vorhergehenden Ansprüche, dadurch gekennzeichnet, daß der Kolben (21) und der Gleitschuh (22) in bezug zueinander mittels einer Ringdichtung (30), die zwischen die Außenfläche des buchsenförmigen Kolbens (21) und die in der Innenfläche des Gleitschuhs (22) ausgebildete Vertiefung eingesetzt ist, abgedichtet sind.

6. Stützanordnung nach Anspruch 5, dadurch gekennzeichnet, daß die Dichtung (30) in eine in der Seitenfläche der genannten Vertiefung (35) ausgebildete und um den Kolben (21) herum verlaufende Dichtungskehle (38) eingesetzt ist.

## Revendications

1. Agencement de support pour rouleau à couronne variable, ledit rouleau (10) comprenant un axe (11) non rotatif sur lequel est montée de façon rotative une enveloppe de rouleau (12), des éléments de charge hydrauliques (20) étant prévus entre ladite enveloppe (12) du rouleau et ledit axe (11) du rouleau, éléments qui agissent contre la face interne (14) de l'enveloppe du rouleau dans le plan (K-K) de la zone de pincement, qui sont supportés sur l'axe (11) du rouleau et qui sont chargés au moyen d'un agent de pression hydraulique, et qui comprennent des pistons (21) disposés dans des alésages cylindriques (15) ou équivalents formés dans l'axe (11) du rouleau de même que des patins de glissement (22) agissant contre la face interne (14) de l'enveloppe du rouleau, lesdits pistons (21) comprenant des douilles munies de cavités internes (23), lesdits patins de glissement (22) étant fixés aux extrémités externes des pistons et rendus hydrauliquement étanches (30), et étant montés de façon pivotante et déplaçable dans la direction radiale du rouleau (10), l'agent de pression hydraulique étant envoyé dans les cavités (23) des pistons (21) de manière à agir sur la partie intérieure des patins de glissement (22) et, à l'extérieur des cavités (23), par l'intermédiaire d'alésages capillaires (28, 28′), dans des poches (31) qui agissent en tant qu'espaces de lubrification hydrostatique dans les patins de glissement (22), caractérisé en ce que des épaulements internes (24) sont formés dans les extrémités externes des pistons en forme de douilles (21), épaulements qui sont orientés en direction radiale des pistons (21) vers les cavités (23), et en ce que des éléments de fixation (25) sont fixés dans les cavités (23), éléments qui sont reliés aux patins de glissement (22) et qui sont munis d'épaulements (26) dirigés vers l'extérieur et placés entre les épaulements (24) des pistons (21) et les parties de fond des alésages cylindriques (15), des interstices (29) qui permettent un mouvement des patins de glissement (22) et des pistons (21) les uns par rapport aux autres subsistant entre lesdits épaulements (24, 26).

2. Agencement de support selon la revendication 1, caractérisé en ce que le patin de glissement (22) et l'élément de fixation (25) du piston (21) sont reliés l'un à l'autre au moyen de vis de fixation (27, 27′), dans lesquelles sont formés lesdits alésages capillaires (28, 28′) qui s'étendent depuis la cavité (23) du piston jusque dans les poches (31) du patin de glissement.

3. Agencement de support selon la revendication 1 ou la revendication 2, caractérisé en ce que les vis de fixation (27′) et les alésages capillaires (28′) constitués dans ces dernières sont de grande longueur de façon à s'étendre profondément dans la cavité (23) du piston.

4. Agencement de support selon l'une quelconque des revendications précédentes, caractérisé en ce qu'un évidement (35) est formé dans la face interne du patin de glissement (22), évidement dans lequel l'extrémité externe du piston (21) est fixée de façon mobile et étanche.

5. Agencement de support selon l'une quelconque des revendications précédentes, caractérisé en ce que le piston (21) et le patin de glissement (22) sont rendus étanches l'un par rapport à l'autre au moyen d'un joint annulaire (30) disposé entre la face externe du piston en forme de douille (21) et l'évidement (35) formé dans la face interne du patin de glissement (22).

6. Agencement de support selon la revendication 5, caractérisé en ce que le joint (30) est disposé dans une gorge à joint (38) formée dans la face latérale dudit évidement (35) et passant autour du piston (21).
